# EUROPÄISCHE PATENTSCHRIFT

(11) **EP 0 922 552 B1**
(45) Veröffentlichungstag und Bekanntmachung des Hinweises auf die Patenterteilung: **22.09.2004**
(21) Anmeldenummer: 98122551.9
(22) Anmeldetag: 02.12.1998
(51) Int. Cl.: B29B 9/04, B29B 9/10, B29B 9/12, C08G 18/00, C08G 18/08, C08G 18/65

(54) **Verfahren zur kontinuierlichen Herstellung von Granulat aus thermoplastischen Polyurethanelastomern**
Process for continuous production of granules of thermoplastic polyurethanelastomers
Procédé pour la fabrication en continu de granules à base de polyurethanes élastomères

(30) Priorität: 10.12.1997 DE 19754885
(43) Veröffentlichungstag der Anmeldung: 16.06.1999
(73) Patentinhaber: BASF AKTIENGESELLSCHAFT, 67056 Ludwigshafen (DE)
(72) Erfinder: Bartholomäus, Peter, 49448 Lemförde (DE); Dauns, Harald, Dr., 49401 Damme (DE); Friedl, Thomas, Dr., 49356 Diepholz (DE); Scholz, Günter, Dr., 49448 Lemförde (DE); Loock, Herbert, 32351 Stemwede (DE); Lukat, Walter, 49453 Rehden (DE)
(74) Vertreter: Isenbruck, Günter, Dr.

(56) Entgegenhaltungen:
- EP-A- 0 097 899
- EP-A- 0 123 771
- DE-A- 4 309 228
- GB-A- 1 057 018
- GB-A- 1 115 026
- US-A- 5 795 948

## Beschreibung

Die Erfindung betrifft ein Verfahren zur kontinuierlichen Herstellung von Granulat aus thermoplastischen Polyurethan-Elastomeren sowie eine Verwendung des Verfahrens zur Herstellung von Extrusions-, Spritzguß- oder Kalanderware oder zur Herstellung von Blends.

Thermoplastische Polyurethan-Elastomere, im folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten läßt sich eine große Variationsbreite mechanischer Eigenschaften erzielen. TPU können kontinuierlich oder diskontinuierlich nach verschiedenen Verfahren hergestellt werden. Als die bekanntestens werden das sogenannte Bandverfahren und das Extruderverfahren auch technisch genutzt.

Im allgemeinen sind TPU gleicher Zusammensetzung nach dem Extruderverfahren transparent, während sie nach dem Bandverfahren auch für die Herstellung opaker Produkte geeignet sind. Opake TPU können beispielsweise zu Folien verarbeitet werden, die ohne zusätzliche Additive kein Blocken zeigen, während transparente TPU hierfür ungeeignet sind.

Nach GB-B 1 057 018 wird aus einer im wesentlichen linearen Polyhydroxylverbindung und überschüssigem organischem Diisocyanat ein Präpolymeres hergestellt, das über eine Dosierpumpe einem Mischhkopf zugeführt und dort mit einer bestimmten Menge eines niedermolekularen Diols gemischt wird. Das erhaltene Reaktionsgemisch wird auf ein Förderband gebracht und durch einen auf 70 bis 130° erhitzten Ofen geführt, bis es erstarrt. Das Reaktionsprodukt wird danach zerkleinert, bei Temperaturen bis 120°C, 6 bis 40 Stunden getempert und kann so zum Beispiel mit Spritzgußmaschinen zu Formkörpern verarbeitet werden. Das Nachtempern und das Zerkleinern sind hierbei Arbeitsgänge, die das Bandverfahren nachteilig wirtschaftlich belasten.

Ausschließlich nach dem Bandverfahren hergestelltes TPU-Granulat hat den Nachteil, daß es in für hochwertige Anwendungen nicht ausreichender Homogenität erhalten wird. Ein derartiges Granulat hat darüber hinaus den Nachteil, daß es infolge des Schneidvorgangs beim Zerkleinern in Form von eckigen, quader- oder würfelförmigen Granulaten anfällt, die schlecht rieseln und bei Förder- oder Mischvorgängen Staub erzeugen.

Bei zähelastischen Typen ist die Schneidfähigkeit teilweise so problematisch, daß eine erhebliche Menge Grobanteil des Granulats vor der Verarbeitung abgesiebt werden muß. Eine anschließende Konfektionierung der würfelförmigen Granulate zwecks Homogenisierung und Umformung in besser rieselfähige, linsenförmige Granulate erhöht die Fertigungskosten deutlich.

In EP-B-0 097 899 wurde daher ein Verfahren vorgeschlagen, wonach sich an eine erste Reaktionsstufe nach dem Bandverfahren eine zweite Reaktionsstufe in einem Extruder anschließen soll. Der Einzug in den Extruder ist jedoch nur möglich, wenn das auf dem Band erhaltene Produkt noch nicht vollständig ausreagiert ist, daß heißt noch relativ weich ist und eine erhöhte Temperatur von beispielsweise 100 bis 200°C aufweist. In der Regel ist der Einzug in den Extruder nur zusammen mit einer Trägerfolie möglich. Die Homogenität des danach erhaltenen TPU-Granulats ist zudem für hochwertige Anwendungszwecke nicht ausreichend.

Es ist auch bekannt, an das Bandverfahren eine konventionelle Extrusion anzuschließen. Dies war jedoch bislang nur mit Zwischenschritten möglich, die für die Wirtschaftlichkeit des Gesamtverfahrens nachteilig sind: Die Bandware, eine feste Schwarte, wird nach diesem Verfahren zu Würfeln granuliert und direkt in Temper- und Homogenisiersilos gefahren. Nachdem das Produkt dort eine gewisse Nachreife durchlaufen hat, wird es heruntergekühlt und in Zwischensilos gefördert. Von dort aus wird es schließlich nach einer intensiven Vortrocknung auf konventionellen Extrudern umgeschmolzen, homogenisiert und granuliert.

Aufgabe der vorliegenden Erfindung ist es daher, ein Verfahren zur kontinuierlichen Herstellung von TPU-Granulat zur Verfügung zu stellen, das die Herstellung eines qualitativ hochwertigen Produkts, insbesondere bezüglich der Homogenität und Rieselfähigkeit, in wirtschaftlicher Weise ermöglicht.

Die Lösung ist ein Verfahren zur kontinuierlichen Herstellung von Granulat aus thermoplastischen Polyurethan-Elastomeren, wonach zunächt durch Umsetzung von
a) organischen Diisocyanaten,
b) difunktionellen Polyhydroxylverbindungen mit Molekulargewichten von 500 bis 8000 und
c) difunktionellen Kettenverlängerungsmitteln mit Molekulargewichten von 60 bis 400 in Gegenwart von
d) Katalysatoren sowie gegebenenfalls
e) Hilfsmittel und/oder
f) Zusatzstoffen
bei Temperaturen von 50 bis 250°C auf einem umlaufenden Trägerband eine Bandware erzeugt wird, die in einer unmittelbar am Bandende angeordneten Zerkleinerungs- und Homogenisiervorrichtung (5) mit einem Zerkleinerungs- und Mischwerkzeug (6) zerkleinert und homogenisiert und anschließend in einem direkt an der Zerkleinerungs- und Homogenisiervorrichtung (5) angeflanschten Extruder (9) aufgeschmolzen, homogenisiert und in einem Granulator (10) granuliert wird.

Es wurde gefunden, daß durch Zwischenschaltung einer Zerkleinerungs- und Homogenisiervorrichtung zwischen Bandende und Extrudereinfüllöffnung ein wirtschaftliches Verfahren zur Herstellung von TPU-Granulaten hochwertiger Qualität, insbesondere guter Homogenität und Rieselfähigkeit zur Verfügung gestellt werden kann. Auch die hohe Ausgangsopazität spezieller Bandprodukte bleibt bei entsprechender Prozeßführung erhalten.

Als Zerkleinerungs- und Homogenisiervorrichtung wird ein Apparat zum Aufbereiten von thermoplastischem Kunststoffgut für die Zuführung zu einem Extruder verwendet, mit einem Aufnahmebehälter sowie einem drehbaren Zerkleinerungs- und Mischwerkzeug. Derartige Apparate werden häufig im Kunststoff-Recycling eingesetzt und sind beispielsweise in EP-B-0 123 771 beschrieben.

Die Aufbereitung der vom Bandende kommenden Schwarte in der Zerkleinerungs- und Homogenisiervorrichtung erfolgt erfindungsgemäß in bevorzugter Weise bei Temperaturen unterhalb von 120°C, bevorzugt in einem Temperaturbereich zwischen 70 und 100°C. Zu diesem Zweck ist die Zerkleinerungs- und Homogenisiervorrichtung bevorzugt gekühlt, insbesondere durch Wasserkühlung am Boden und/oder Luftspülung unterhalb des rotierenden Zerkleinerungs- und Mischwerkzeuges. Durch die Temperaturregelung in der Zerkleinerungs- und Homogenisiervorrichtung kann unter anderem die Verklebungsgefahr, insbesondere am Boden der Vorrichtung, reduziert werden. Durch eine Zugabe von Trennmitteln, beispielsweise über die Luftspülung, läßt sich die Verklebungsgefahr weiter verringern.

Weiterhin ist es vorteilhaft, daß durch Einstellen der Verweilzeit des Kunststoffgutes in der Zerkleinerungs- und Homogenisiervorrichtung der Homogenitätsgrad des Endprodukts gesteuert und somit eine gleichmäßige Produktqualität erreicht werden kann. In der Zerkleinerungs- und Homogenisiervorrichtung werden Unregelmäßigkeiten längs, quer und vertikal in der vom Band kommenden Schwarte wesentlich besser ausgeglichen, als es in einem unmittelbar am Bandende angeordneten Extruder alleine möglich wäre.

Durch die Anordnung einer Zerkleinerungs- und Homogenisiervorrichtung zwischen Bandende und Extrudereinfüllöffnung besteht weiterhin die Möglichkeit, dort Additive, wie Gleitmittel, Flammschutzmittel oder Antioxidantien oder auch Regranulat oder weitere Kautschuke und Kunststoffe zur Herstellung von Blends zuzugeben.

Besonders vorteilhaft ist es, den Extruder tangential an die Zerkleinerungs- und Homogenisiervorrichtung anzuflanschen, wobei durch die Zentrifugalkräfte eine gute Stopfwirkung des Zerkleinerungs- und Homogenisiervorrichtung und somit eine gute Extruderfüllung und ein hoher spezifischer Durchsatz erreicht werden.

Das nach dem erfindungsgemäßen Verfahren erhaltene TPU-Granulat weist gegenüber einem ausschließlich nach dem Bandverfahren erhaltenen Granulat mit überwiegend annähernd würfelförmigen Teilchen gleichmäßige, überwiegend abgerundete Teilchen auf. Das Granulat nach dem erfindungsgemäßen Verfahren hat daher ein höheres Schüttgewicht, eine bessere Rieselfähigkeit und somit ein einfacheres Handling und einen höheren Durchsatz bei der Verarbeitung. Es fällt kein Grobgut und kaum Staub an.

In besonders vorteilhafter Weise ist das erfindungsgemäße Verfahren für TPU-Granulat einsetzbar, bei dem es auf die Erhaltung der Opazität der Bandware ankommt. Diese kann nach dem erfindungsgemäßen Verfahren in den nachfolgenden Verarbeitungsschritten in der Zerkleinerungs- und Homogenisiervorrichtung und im Extruder durch eine schonende Weiterbehandlung, erhalten bleiben. Dazu eignet sich insbesondere die Weiterverarbeitung in einem Einwellenextruder.

Zu den Aufbaukomponenten (a) bis (d) und gegebenenfalls (e) und/oder (f), die nach dem erfindungsgemäßen Verfahren zu TPU umgesetzt werden können, ist folgendes auzuführen:
a) Als organische Diisocyanate (a) kommen beispielsweise aliphatische cycloaliphatische und vorzugsweise aromatische Diisocyanate in Betracht. Im einzelnen seien beispielhaft genannt: aliphatische Diisocyanate, wie Hexamethylen-diisocyanat, 2-Methyl-4,4-Dimethyl-hexamethylen-diisocyanat, cycloaliphatische Diisocyanate, wie Isophoron-Diisocyanat, 1,4-Cyclohexandiisocyanat, 1,3-Bis(isocyocyanatomethyl)-cyclohexan, 1-Methyl-2,4-und -2,6-cyclohexan-diisocyanat sowie die entsprechenden Isomerengemische, 4,4'-, 2,4'- und 2,2'-Dicyclohexyl-methan-diisocyanat sowie die entsprechenden Isomerengemische und vorzugsweise aromatische Diisocyanate, wie p-Phenylen-diisocyanat, 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan diisocyanate und 1,5-Naphthylendiisocyanat. Vorzugsweise verwendet werden Hexamethylen-diisocyanat, Isophoron-diisocyanat, Diphenylmethan-diisocyanat, Isomerengemische mit einem 4,4'-Diphenylmethan-diisocyanatgehalt von größer als 96 Gew.-% und insbesondere 4,4'-Diphenylmethan-diisocyanat und 1,5-Naphthylen-diisocyanat.
b) Als höhermolekulare Polyhydoxylverbindungen (b) mit Molekulargewichten von 500 bis 8000 eignen sich vorzugsweise Polyetherole und insbesondere Polyesterole. In Betracht kommen jedoch auch andere hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.
   Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt Ethylenoxid, 1,2-Propylenoxid, Epichlorhydrin und 1,2- und 2,3-Butylenoxid. Vorzugsweise Anwendung finden Ethylenoxid und Mischungen aus Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanol-amine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.
   Vorzugsweise verwendet werden hydroxylgruppenhaltiges Polytetrahydrofuran und Polyetherole aus Propylenoxid und Ethylenoxid, in denen mehr als 50%, vorzugsweise 60 bis 80% der OH-Gruppen primäre Hydroxylgruppen sind und bei denen zumindest ein Teil des Ethylenoxids als endständiger Block angeordnet ist.
   Solche Polyetherole können erhalten werden, indem man z.B. an das Startermolekül zunächst das Propylenoxid und daran anschließend das Ethylenoxid polymerisiert oder zunächst das gesamte Propylenoxid im Gemisch mit einem Teil des Ethylenoxids copolymerisiert oder schrittweise zunächst einen Teil des Ethylenoxids, dann das gesamte Propylenoxid und dann den Rest des Ethylenoxids an das Startermolekül anpolymerisiert.
   Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.
   Geeignete Polyesterole können beispielsweise aus Dicarbonsäuren mit 2 bis 12 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Carbonsäuren die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 16 Kohlenstoffatomen, wie Ethylenglykol, Diethylenglykol, Butandiol-1,4, Pentandiol-1,5, Hexandiol-1,6, Decandiol-1,10,2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Ethandiol-polyadipate. 1,4-Butandiolpolyadipate, Ethandiol-butandiol-polyadipate, 1,6-Hexandiolneopentyl-glykol-polyadipate, 1,6-Hexandiol-1,4-butandiol-poly-adipate und Polycaprolactone.
   Die Polyesterole besitzen Molekulargewichte von 500 bis 6000, vorzugsweise von 800 bis 3500.
c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2,4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(_-hydroxyethyl)-hydrochinon, (cyclo)aliphatische Diamine, wie z.B. Isophoron-diamin, Ethylendiamin 1,2-, 1,3-Propylendiamin, N-Methyl-propylendiamin-1,3, N,N'-Diethylethylendiamin und aromatische Diamnine, wie z.B. 2,4- und 2,6-Toluylendiamin, 3,5-Diethyl-2,4- und -2,6-toluylendiamin und primäre orthodi-, tri- und/oder tetraalkylsubstituierte 4,4'-Diaminodiphenylmethane.
   Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:4,4, wobei die Härte und der Schmelzpunkt der TPU mit zunehmendem Gehalt an Diolen ansteigt.
   Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate zur Summe der Hydroxylgruppen oder Hydroxyl- und Aminogruppen der Komponenten (b) und (c) 1:0,85 bis 1:1,20, vorzugsweise 1 : 0,90 bis 1 : 1,10 und insbesondere 1 : 0,95 bis 1 : 1,05 beträgt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik benannten und üblichen tertiären Amine, wie z.B. Triethylamin, Dimethylcyclohexylamin, N-Methylmorpholin, N,N'-Dimethylpiperazin, Diazabi-cyclo-(2,2,2)-octan und ähnliche sowie insbesonders organische Metallverbindungen wie Titansäureester, Eisenverbindungen, Zinnverbindungen, z.B. Zinnacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teilen Polyhydroxylverbindung eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Die Herstellung der TPU nach dem erfindungsgemäßen Verfahren wird im folgenden anhand der einzigen Figur und anhand von Ausführungsbeispielen erläutert.

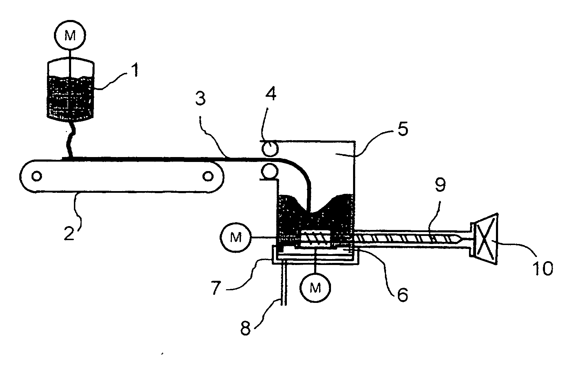

Die Figur 1 zeigt eine schematische Darstellung einer zur Durchführung des erfindungsgemäßen Verfahrens geeigneten Anlage.

Das erfindungsgemäße Verfahren wird im einzelnen auf folgende Weise durchgeführt:

Zur Erzeugung der Bandware werden die Aufbaukomponenten (a) bis (d) und gegebenenfalls (e) und/oder (f) beim Temperaturen oberhalb des Schmelzpunktes der Aufbaukomponenten (a) bis (c) mit Hilfe eines Mischkopfes 1 kontinuierlich gemischt. Die Reaktionsmischung wird auf ein umlaufendes Trägerband 2, vorzugsweise ein PTFE-Band, aufgebracht und mit einer Geschwindigkeit von 1 bis 50 m/Minute, vorzugsweise von 3 bis 30 m/Minute durch eine temperierte Zone geführt. Die Reaktionstemperatur in der temperierten Zone beträgt 60 bis 300°C, vorzugsweise 80 bis 200°C. In Abhängigkeit vom Diisocyanatanteil in der Reaktionsmischung wird die Reaktion durch Kühlen und Erhitzen so gesteuert, daß die Bandware (Schwarte) 3 am Bandende einen Umsetzungsgrad von 70 bis 99 %, vorzugsweise 90 bis 99 % aufweist. Die Bandware 3 wird über Einzugswalzen 4 kontinuierlich in die Zerkleinerungs- und Homogenisiervorrichtung 5 eingebracht.

Dort wird die Bandware (Schwarte) 3 durch ein Zerkleinerungs- und Mischwerkzeug 6 in für den Extruder 9 einziehbare Stücke zerkleinert und in die Einzugsöffnung gedrückt. Durch eine mittlere Verweilzeit von vorzugsweise 5 bis 20 Minuten, die deutlich über der im Extruder erreichbaren, durch das freie Volumen und den Durchsatz begrenzten Verweilzeit liegt, wird das Bandmaterial gut homogenisiert und mit einer definierten Temperatur von ca. 50 bis 120°C, bevorzugt ca. 70 bis 100°C, in den Extruder gegeben.
Die umlaufenden Messer versetzen das Material in der Zerkleinerungs- und Homogenisiervorrichtung 5 ebenfalls in eine Rotationsbewegung und stopfen das Produkt durch die entstehenden Zentrifugalkräfte regelrecht in den Einzug des Extruders 9 hinein, so daß ein hoher spezifischer Durchsatz erreicht wird. Die noch sehr frische, unausgereifte Bandware 3 erfordert zudem nur eine geringe spezifische Aufschmelz- und Umformenergie im Extruder 9.

Die Zerkleinerungs- und Homogenisiervorrichtung 5 kann durch Luftspülung 8 und/oder durch Wasserkühlung 7 gekühlt werden. Die aus der Düsenplatte des Extruders 9 austretende Schmelze wird im Granulator 10 zu Granulat konfektioniert.

Zuschlagstoffe, Regranulate und etwaige Blendkomponenten können in der Zerkleinerungs- und Homogenisiervorrichtung 5 homogen eingearbeitet werden. Beispielsweise lassen sich Blends aus thermoplastischem Polyurethanen mit Polyolefinen, die über Funktionalisierung modifiziert sein können, mit Styrolcopolymeren, Polyamiden, Polyäthern, Polyestern, Polycarbonaten und/oder Kautschuken herstellen.

Die Materialeigenschaften des Endproduktes können im wesentlichen durch die Rezeptur, die Vorgeschichte auf dem Reaktionsband, die Schneckengeometrie und die Prozeßbedingungen während der Extrusion in weiten Bereichen eingestellt werden, so daß sowohl hoch transparente, wie auch sehr opake Endprodukte herstellbar sind. Insbesondere können Kabelumantelungen, Schläuche und/oder Folien hergestellt werden, wobei die typischen kristallinen Strukturen der Bandware, die für die Opazität verantwortlich sind, erhalten werden können.

### Beispiel 1

Eine Mischung aus
1000 Gew.-Teilen eines Poly-Tetrahydrofurans,
600 Gew.-Teilen, 4,4'-Diphenylmethandiisocyanat,
126 Gew.-Teilen Butandiol-1,4 wurde auf 80 °C erwärmt und in einem Mischkopf intensiv gemischt.

Das erhaltene Reaktionsgemisch wurde mit einer Temperatur von 97°C auf ein PTFE-Band aufgebracht.

Die am Ende des Bandes zu einer festen Bandware (Schwarte) 3 erstarrte Reaktionsmischung wurde mit ca. 70°C über Einzugswalzen 4 kontinuierlich direkt einer Zerkleinerungs- und Homogenisierungsvorrichtung 5 zugeführt.
Dort wurde es bei Temperaturen von ca. 85°C zerkleinert und in einen tangential angeflanschten Einwellenextruder 5 gefördert. Die Gehäusetemperaturen lagen im Einzugsbereich bei etwa 150 bis 170°C, in der Mittelzone zwischen 170 und 200°C und in der Austragszone bei 200 bis 210°C.
Die an der Düsenplatte austretende Schmelze wurde mit einer Unterwassergranulierung 10 zu gleichmäßigem Linsengranulat konfektioniert und anschließend getrocknet.

Das opake Granulat wurde durch Spritzguß zu Prüfkörpern verarbeitet, an denen die folgenden mechanischen Eigenschaften gemessen wurden:
Härte nach DIN 53 505 Shore A:87
Zugfestigkeit nach DIN 53 504 (N/mm²): 48
Reißdehnung nach DIN 53 504 (%) : 650
Weiterreißfestigkeit nach DIN 53 515 (N/mm) : 66
Abrieb nach DIN 53 516 (mm) : 31

Das erhaltene Granulat hatte Extrusionsqualität.

### Beispiel 2

Eine Mischung aus
1000 Gew.-Teilen Hexandiol-butandiol-adipat wurde mit
1200 Gew.-Teilen 4,4'-Diphenylmethandiisocyanat und
385 Gew.-Teilen Butandiol-1,4 sowie
8 Gew.-Teilen Polycarbodiimid auf 80 °C erwärmt und in einem Mischkopf intensiv gemischt.
Das erhaltene Reaktionsgemisch wurde mit einer Temperatur von 112°C auf ein umlaufendes PTFE-Band aufgebracht.

Die am Ende des Bandes zu einer festen Bandware (Schwarte) 3 erstarrte Reaktionsmischung wurde mit ca. 80°C über Einzugswalzen 4 kontinuierlich direkt einer Zerkleinerungs- und Homogenisiervorrichtung 5 zugeführt.
Dort wurde es bei Temperaturen von ca. 105°C zerkleinert und in einen tangential angeflanschten Einwellenextruder 9 gefördert. Die Gehäusetemperaturen lagen im Einzugsbereich bei etwa 170 bis 190°C, in der Mittelzone zwischen 190 und 210°C und in der Austragszone bei 210 bis 230°C.
Die an der Düsenplatte austretende Schmelze wurde mit einer Unterwassergranulierung 10 zu gleichmäßigem Linsengranulat konfektioniert und anschließend getrocknet.

Das erhaltene Granulat wurde durch Spritzguß zu Prüfkörpern verarbeitet, an denen die folgenden mechanischen Eigenschaften gemessen wurden:
Härte nach DIN 53 505 Shore D: 65
Zugefestigkeit nach DIN 53 504 (N/mm²) : 52
Reißdehnung nach DIN 53 504 (%) : 410
Weiterreißfestigkeit nach DIN 53 515 (N/mm) : 190
Abrieb nach DIN 53 516 (mm) : 22.

Das erhaltene Granulat findet vorzugsweise im Spritzguß Anwendung.

### Beispiel 3

1000 Gew.-Teilen eines Poly-Tetrahydrofurans,
600 Gew.-Teilen 4,4'-Diphenylmethandiisocyanat und
126 Gew.-Teilen Butandiol-1,4
wurden auf ca. 80°C erwärmt und in einem Mischkopf intensiv gemischt. Das erhaltene Reaktionsgemisch wurde mit einer Temperatur von ca. 94°C auf ein umlaufendes PTFE-Band aufgebracht.
Die am Ende des Bandes zu einer festen Schwarte erstarrte Reaktionsmischung wurde mit ca. 75°C über Einzugswalzen kontinuierlich einer Zerkleinerungs- und Homogenisiervorrichtung zugeführt. Über eine Dosiereinrichtung wurden parallel dazu ca. 30 Gew.-Teile LDPE (bezogen auf die Gesamtmischung) direkt in die Zerkleinerungs- und Homogenisiervorrichtung zugegeben.
Dort wurde die Schwarte bei Temperaturen von ca. 80°C zerkleinert, mit dem LDPE homogen vermischt und in einen tangential angeflanschten Einwellenextruder gefördert. Die Gehäusetemperaturen lagen im Einzugsbereich bei etwa 170 bis 190°C, in der Mittelzone zwischen 190 und 210°C und in der Austragszone bei 210 bis 230°C.
Die an der Düsenplatte austretende Schmelze wurde mit einer Unterwassergranulierung zu gleichmäßigem Linsengranulat konfektioniert und anschließend getrocknet.

Das erhaltene Granulat wurde durch Spritzguß zu Prüfkörpern verarbeitet, an denen die folgenden mechanischen Eigenschaften gemessen wurden:
Härte nach DIN 53 505 Shore A: 90
Zugfestigkeit nach DIN 53 504 (N/mm²): 33
Reißdehnung nach DIN 53 503 (%) : 600
Weiterreißfestigkeit nach DIN 53 515 (N/nm) : 60
Abrieb nach DIN 53 516 (nm): 68

Das erhaltene Granulat ließ sich zu Extrusionsartikeln weiterverarbeiten.

## Patentansprüche

1. Verfahren zur kontinuierlichen Herstellung von Granulat aus thermoplastischen Polyurethan-Elastomeren, wonach zunächt durch Umsetzung von
a) organischen Diisocyanaten,
b) difunktionellen Polyhydroxylverbindungen mit Molekulargewichten von 500 bis 8000 und
c) difunktionellen Kettenverlängerungsmitteln mit Molekulargewichten von 60 bis 400 in Gegenwart von
d) Katalysatoren sowie gegebenenfalls
e) Hilfsmittel und/oder
f) Zusatzstoffen
bei Temperaturen von 50 bis 250°C auf einem umlaufenden Trägerband (2) eine Bandware (3) erzeugt wird, die in einer unmittelbar am Bandende angeordneten Zerkleinerungs- und Homogenisiervorrichtung (5) mit einem Zerkleinerungs- und Mischwerkzeug (6) zerkleinert und homogenisiert und anschließend in einem direkt an der Zerkleinerungs- und Homogenisiervorrichtung (5) angeflanschten Extruder (9) aufgeschmolzen, homogenisiert und in einem Granulator (10) granuliert wird.

2. Verfahren nach Anspruch 1, **dadurch gekennzeichnet, daß** die Temperatur in der Zerkleinerungs- und Homogenisiervorrichtung (5) unterhalb von 120°C, bevorzugt zwischen 70 und 100°C, liegt.

3. Verfahren nach Anspruch 1 oder 2, **dadurch gekennzeichnet, daß** die Zerkleinerungs- und Homogenisiervorrichtung (5) gekühlt ist, insbesondere durch Wasserkühlung (7) am Boden und/oder durch Luftspülung (8) unterhalb des Zerkleinerungs- und Mischwerkzeugs (6).

4. Verfahren nach einem der Ansprüche 1 bis 3, **dadurch gekennzeichnet, daß** die mittlere Verweilzeit in der Zerkleinerungs- und Homogenisiervorrichtung (5) mindestens 1 Minute, bevorzugt von 5 bis 20 Minuten, beträgt.

5. Verfahren nach Anspruch einem der Ansprüche 1 bis 4, **dadurch gekennzeichnet, daß** der Extruder (9) ein Einwellenextruder ist.

6. Verfahren nach einem der Ansprüche 1 bis 5, **dadurch gekennzeichnet, daß** der Extruder (9) tangential an die Zerkleinerungs- und Homogenisiervorrichtung (5) angeflanscht ist.

7. Verfahren nach einem der Ansprüche 1 bis 6, **dadurch gekennzeichnet, daß** in der Zerkleinerungs- und Homogenisiervorrichtung (5) Additive zugegeben werden.

8. Verwendung des nach einem Verfahren gemäß einem der Ansprüche 1 bis 7 erhaltenen Granulats zur Herstellung von Extrusions-, Spritzguß- oder Kalanderware, insbesondere von Kabelummantelungen, Schläuchen und/oder Folien.

9. Verwendung des Verfahrens nach einem der Ansprüche 1 bis 7, zur Herstellung von Blends aus thermoplastischen Polyurethanen mit Polyolefinen, Styrolcopolymeren, Polyamiden, Polyethern, Polyestern, Polycarbonaten und/oder Kautschuken.

## Claims

1. A process for the continuous production of granulated thermoplastic polyurethane elastomers, in which a sheet product (3) is first produced by reacting
a) organic diisocyanates,
b) difunctional polyhydroxyl compounds having molecular weights of from 500 to 8000 and
c) difunctional chain extenders having molecular weights of from 60 to 400 in the presence of
d) catalysts and, if desired,
e) auxiliaries and/or
f) additives
at from 50 to 250°C on a continuous conveyor belt (2) and is comminuted and homogenized in a comminution and homogenization apparatus (5) fitted with a communition and mixing tool (6) and arranged directly at the end of the belt and is subsequently melted and homogenized in an extruder (9) flanged directly onto the comminution and homogenization apparatus (5) and granulated in a granulator (10).

2. A process as claimed in claim 1, wherein the temperature in the comminution and homogenization apparatus (5) is below 120°C, preferably at from 70 to 100°C.

3. A process as claimed in claim 1 or 2, wherein the comminution and homogenization apparatus (5) is cooled, in particular by water cooling (7) at the bottom and/or by passing air (8) through underneath the comminution and mixing tool (6).

4. A process as claimed in any of claims 1 to 3, wherein the mean residence time in the comminution and homogenization apparatus (5) is at least 1 minute, preferably from 5 to 20 minutes.

5. A process as claimed in any of claims 1 to 4, wherein the extruder (9) is a single-screw extruder.

6. A process as claimed in any of claims 1 to 5, wherein the extruder (9) is flanged tangentially onto the comminution and homogenization apparatus (5).

7. A process as claimed in any of claims 1 to 6, wherein additives are added in the comminution and homogenization apparatus (5).

8. The use of the granulated material obtained by a process as claimed in any of claims 1 to 7 for producing extruded, injected-molded or calendered articles, in particular cable sheathing, hoses and/or films.

9. The use of a process as claimed in any of claims 1 to 7 for producing blends of thermoplastic polyurethanes with polyolefins, styrene copolymers, polyamides, polyethers, polyesters, polycarbonates and/or rubbers.

## Revendications

1. Procédé pour la fabrication en continu de granulés de polyuréthannes élastomères, selon lequel on produit d'abord, par réaction
a) de diisocyanates organiques,
b) de composés polyhydroxylés difonctionnels présentant des poids moléculaires de 500 à 8000 et
c) d'agents d'allongement de chaîne difonctionnels présentant des poids moléculaires de 60 à 400, en présence de
d) catalyseurs et le cas échéant
e) adjuvants et/ou
f) additifs,
à des températures de 50 à 250°C, sur une bande transporteuse sans fin (2), un ruban (3) qui, dans un dispositif de broyage et d'homogénéisation (5) comportant un outil de broyage et de mélange (6) et disposé immédiatement à l'extrémité du ruban, est broyé et homogénéisé et ensuite, dans une extrudeuse (9) directement bridée sur le dispositif de broyage et d'homogénéisation (5), et est fondu, homogénéisé et granulé dans un granulateur (10).

2. Procédé selon la revendication 1, **caractérisé en ce que** la température dans le dispositif de broyage et d'homogénéisation (5) se situe au-dessous de 120°C, de préférence entre 70 et 100°C.

3. Procédé selon la revendication 1 ou 2, **caractérisé en ce que** le dispositif de broyage et d'homogénéisation (5) est refroidi, en particulier par refroidissement par eau (7) à sa partie inférieure et/ou par rinçage à l'air (8) au-dessous de l'outil de broyage et de mélange (6).

4. Procédé selon l'une quelconque des revendications 1 à 3, **caractérisé en ce que** le temps de séjour moyen dans le dispositif de broyage et d'homogénéisation (5) est d'au moins 1 minute, de préférence de 5 à 20 minutes.

5. Procédé selon l'une quelconque des revendications 1 à 4, **caractérisé en ce que** l'extrudeuse (9) est une extrudeuse monovis.

6. Procédé selon l'une quelconque des revendications 1 à 5, **caractérisé en ce que** l'extrudeuse (9) est bridée tangentiellement au dispositif de broyage et d'homogénéisation (5).

7. Procédé selon l'une quelconque des revendications 1 à 6, **caractérisé en ce que** l'on ajoute des additifs dans le dispositif de broyage et d'homogénéisation (5).

8. Utilisation du produit granulé obtenu par un procédé selon l'une quelconque des revendications 1 à 7 pour la fabrication de produits extrudés, moulés par injection ou calandrés, en particulier de gainages de câbles, de flexibles et/ou de feuilles.

9. Utilisation du procédé selon l'une quelconque des revendications 1 à 7 pour la production de mélanges de polyuréthannes thermoplastiques et de polyoléfines, de copolymères de styrène, de polyamides, de polyéthers, de polyesters, de polycarbonates et/ou de caoutchoucs.
